# EUROPÄISCHE PATENTANMELDUNG

(11) **EP 0 713 992 A1**
(43) Veröffentlichungstag der Anmeldung: **29.05.1996**
(21) Anmeldenummer: 95117824.3
(22) Anmeldetag: 10.11.1995
(51) Int. Cl.: F16L 21/03, F16L 17/025, F16L 17/03, F16L 47/06

(54) **Rohr und Rohrsteckverbindung**

(30) Priorität: 11.11.1994 DE 4440332
(71) Anmelder: Steinzeugwerk Ponholz GmbH & Co. KG, D-93142 Maxhütte-Haidhof (DE)
(72) Erfinder: Mulzer, Karl-Heinz, D-93142 Maxhütte-Haidhof (DE); Dirscherl, Josef, D-93158 Teublitz (DE)
(74) Vertreter: Reinhard - Skuhra - Weise & Partner

(57) **Zusammenfassung**

Die Erfindung betrifft ein Rohr, insbesondere aus Ton, Steinzeug oder dergleichen mit einem Muffenende, in das ein Dichtungsring aus elastischem Material eingesetzt ist, der einen Verstärkungsring aufweist, wobei in dem Muffenende ein den Muffenende-Innendurchmesser teilweise erweiternder Einschnitt vorgesehen ist und der Dichtungsring zwei von ihm abstehende Dichtungslippen aufweist, von welchen sich eine erste Dichtungslippe vom Muffenende weg und etwa parallel zur Rohrachse erstreckt, während die zweite Dichtungslippe gegenüber der ersten Dichtungslippe in Richtung auf die Rohrachse versetzt angeordnet ist, und wobei zwischen der ersten und zweiten Dichtungslippe eine Tasche gebildet ist. Die Erfindung betrifft ferner eine Rohrsteckverbindung aus einem derartigen ersten Rohr und einem zweiten Rohr mit einem Spitzende für das dichtende Einstecken in das Muffenende des ersten Rohres.

## Beschreibung

Die Erfindung betrifft ein Rohr gemäß dem Oberbegriff des Patentanspruchs 1 sowie eine Rohrsteckverbindung.

Aus der DE- 32 12 441 ist ein Rohr gemäß dem Oberbegriff des Patentanspruchs 1 bekannt, bei dem ein Dichtungsring in das Muffenende eingesetzt ist, der eine ringförmige Verstärkung aufweist. Die ringförmige Verstärkung befindet sich hierbei außerhalb des eigentlichen Dichtungsringes in Anlage zur Innenfläche des Muffenendes. Zur Abdichtung der Steckverbindung zwischen dem den Dichtungsring enthaltenden Muffenende und dem Spitzende des in das Muffenende einzuschiebenden Rohres ist der Einsatz einer Dichtungsmasse erforderlich.

Der Erfindung liegt die Aufgabe zugrunde, ein Rohr sowie eine Rohrsteckverbindung der eingangs genannten Art zu schaffen, das einen dichten Abschluß im Bereich des Muffenendes gegenüber dem Spitzende des nächsten Rohres ohne Verwendung von zusätzlicher Dichtungsmasse ermöglicht.

Diese Aufgabe wird erfindungsgemäß durch die im kennzeichnenden Teil des Patentanspruchs 1 angegebenen Merkmale sowie durch Anspruch 10 gelöst.

Die Erfindung schafft ein Rohr mit einem Dichtungsring, welcher in das Muffenende eingesetzt ist und eine Dichtungslippe aufweist, der im unbelasteten Zustand im wesentlichen in Richtung zur Rohrachse weist und durch das Spitzende des anzuschließenden Rohres in seine Dichtungsposition gedrückt wird. Die Dichtungslippe bildet zusammen mit einer benachbarten Dichtungslippe eine vom Muffenende wegweisende Tasche, derart, daß sie bei dem Aufbau von Druckwerten durch Flüssigkeiten oder dergleichen eine Erweiterung erfährt und die zur Rohrachse am nächsten befindliche Dichtungslippe gegen das eingesetzte Spitzende des eingesetzten Rohres drückt und damit eine hohe Dichtung zwischen den beiden Rohren bewirkt.

Die Erfindung schafft somit eine Rohrsteckverbindung zwischen dem Muffenende eines ersten Rohres und dem Spitzende eines zweiten Rohres, die eine hohe Dichtheit gewährleistet und beim Aufbau von Druckwerten infolge von Flüssigkeiten etc. eine zunehmende Dichtheit erreichen läßt.

Gemäß der Erfindung ist das Muffenende an seiner Innenfläche nahe dem Muffenrand mit einem Einschnitt versehen, der zu einer teilweisen Vergrößerung des Innendurchmessers des Muffenendes führt und nach Art einer Mulde ausgebildet ist, die zur dichten Aufnahme des Dichtungsringes beiträgt. Die Außenfläche des in das Muffenende eingesetzten Dichtungsringes verläuft entlang des Einschnitts im Muffenende und hat damit eine Gestalt, die zur Rohrachse konzentrisch ist. Die Außenfläche des Dichtungsringes legt sich an den im Muffenende vorgesehenen Einschnitt an, wodurch eine zusätzliche Erhöhung der Abdichtung zwischen dem Muffenende und dem Dichtungsring erzielt wird.

Gemäß einer abgewandelten Ausführungsform der Erfindung wird durch eine Aufnahmenut eines Verstärkungsrings eine zusätzliche Drucktasche geschaffen, wenn durch Flüssigkeiten oder dergleichen ein entsprechender Innendruck erzeugt wird, wodurch die Drucktasche die zur Muffe weisende Dichtungslippe in den konisch verlaufenden Einschnitt der Muffe hineinpreßt.

Durch das Einschieben der Spitze des Spitzendes in die Muffe wird der Dichtring in Längsrichtung nach hinten, das heißt in Schieberichtung, verschoben. Dadurch erfolgt eine zusätzliche Abdichtung im konusförmigen Einschnitt, was die Dichtheit zur Muffe ohne jegliche Druckbelastung durch Flüssigkeit gewährleistet. Bei Innendruckbelastung durch eine Flüssigkeit im Rohr wird das zum konischen Einschnitt weisende Wandteil bzw. die dadurch definierte Dichtungslippe der Ringdichtung aufgrund der hierbei als Drucktasche wirkenden Aufnahmenut an den konusförmigen Einschnitt angepreßt, während die zwischen den beiden Dichtlippen gebildete Tasche die auf das Spitzende wirkende Dichtlippe gegen die Spitze des Spitzendes des eingesetzten Rohres preßt.

Der Einsatz einer Verstärkung in Form eines Verstärkungsringes, der in eine Nut zwischen der ersten und zweiten Dichtungslippe eingreift, verhindert ein Umklappen der Wandung des Dichtungsringes bzw. der ersten Dichtungslippe. Hierdurch wird eine übermäßige bzw. unzulässige Abweichung der Rohrspitze bzw. des Spitzendes im Verhältnis zur Achse des Rohres verhindert, in welches das Spitzende eingesetzt ist.

Im folgenden werden bevorzugte Ausführungsformen des erfindungsgemäßen Rohres bzw. der Rohrsteckverbindung anhand der Zeichnungen zur Erläuterung weiterer Vorteile und Merkmale beschrieben.

Es zeigen:
- Fig. 1: eine Ansicht des Muffenendes mit Dichtungsring und dem zugehörigen Spitzende des in das Muffenende einzuschiebenden Rohres, wobei die Dichtung durch das Spitzende nicht belastet ist,
- Fig. 2: eine Darstellung entsprechend Fig. 1 mit in das Muffenende eingeschobenen Spitzende, wobei die Dichtung keiner Druckbeanspruchung von innen unterliegt,
- Fig. 3: eine Fig. 2 entsprechende Darstellung, wobei die Dichtung einer Druckbeanspruchung im Inneren unterliegt.
- Fig. 4: eine Darstellung entsprechend Fig. 3 in vergrößertem Maßstab, wobei die Dichtung einer Druckbeanspruchung unterliegt,
- Fig. 5: eine weitere Ausführungsform der Erfindung, und
- Fig. 6: eine Ansicht einer weiteren Ausführungsform der Erfindung.

Nachfolgend werden bevorzugte Ausführungsformen der Erfindung unter Bezugnahme auf die Zeichnungen erläutert.

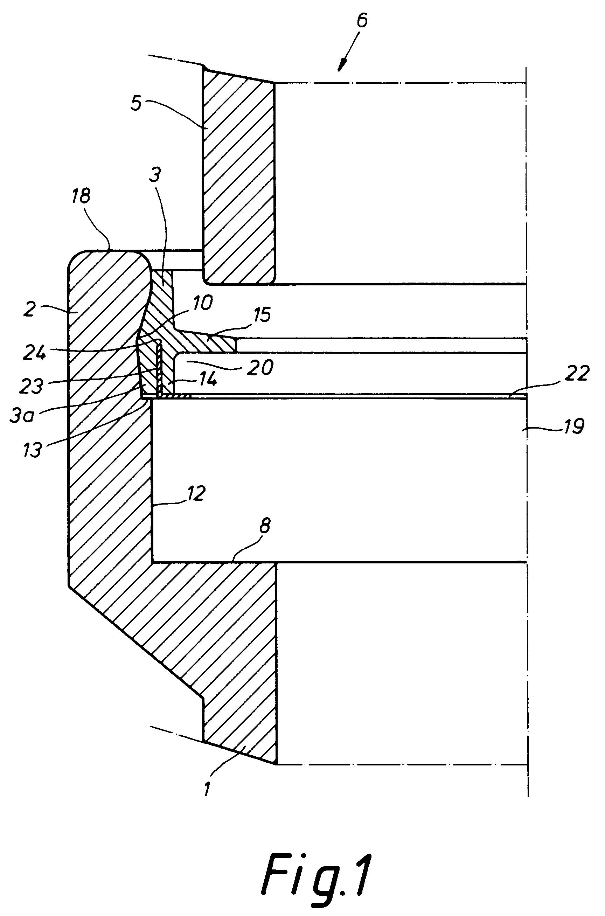

Fig. 1 zeigt eine Schnittansicht zur Erläuterung der erfindungsgemäßen Rohrsteckverbindung mit zwischen den zugehörigen Rohrenden eingesetztem Dichtungsring. Mit 1 ist ein Rohr aus Ton, Steinzeug oder dergleichen bezeichnet, dessen Muffenende 2 mit einem Dichtungsring 3 versehen ist.

Mit 5 ist das Spitzende eines weiteren, in das Muffenende 2 einzusetzenden Rohres 6 bezeichnet.

Wie bei Rohren dieser Art ist das Muffenende flanschförmig gegenüber dem Hauptrohraußendurchmesser erweitert und mit einem innenliegenden Muffenspiegel 8 versehen. Oberhalb des Muffenspiegels 8, das heißt in der Nähe des Muffenrandes, weist das Muffenende 2 eine Einschnitt 10 mit im wesentlichen konischer Form auf, das heißt daß sich der Innendurchmesser des Muffenendes 2 im Bereich des konischen Einschnittes 10 vergrößert. Wie sich aus Fig. 1 ergibt, hat das Muffenende 2 im Bereich seiner im wesentlichen zylindrischen Innenwand oder Innenfläche 12 einen Verlauf, der zylindrisch und koaxial zur Rohrachse ist bis hin zu einem nach außen verlaufenden Ansatz bzw. Stufe 13 oberhalb des Muffenspiegels 8, von welcher sich der Einschnitt 10 nach außen bis zu einem Maximum des Innendurchmessers erweitert, wonach der Innendurchmesser sich wieder bis zum Außenende des Muffenendes im wesentlichen auf den Innendurchmesser verringert, welchen das Muffenende 2 entlang seiner Innenfläche 12 besitzt.

Das Spitzende 5 hat zylindrische, gerade Form. In Fig. 1 ist das Spitzende 5 nicht in das Muffenende 2 eingesetzt, das heißt, der Dichtungsring 3 befindet sich im unbelasteten Zustand. Der Dichtungsring 3 hat den in Fig. 1 gezeigten Querschnitt. Vom Dichtungsring 3 streben zwei Dichtungslippen 14, 15 ab und zwar vorzugsweise von der Mitte bzw. halben Höhe des Dichtungsrings 3 in Richtung auf die Ringachse bzw. Rohrachse. Der sich parallel zur Dichtungslippe 14 außenseitig erstreckende Wandbereich der Dichtung 3 ist mit 3a bezeichnet. Der Wandbereich 3a wirkt gleichfalls als Dichtungslippe und drückt gegen den konusförmigen Einschnitt 10 im Bereich des konusförmigen Einschnittes 10 oberhalb des Muffenspiegels 8, wie Fig. 1 deutlich veranschaulicht. Der Dichtungsring 3 besteht aus einem elastischen, vorzugsweise elastomerem Material und fügt sich nach seinem Einschieben in das Muffenende an die Form des Einschnittes 10 an. Aus diesem Grunde ist die Außenfläche des Dichtungsringes 3 nicht von zylindrischer oder zur Ringachse konzentrischer Form, sondern ebenfalls konusförmig ausgebildet, wenn die Ringdichtung 3 in das Muffenende eingesetzt ist. Die Höhe des Dichtungsringes 3 ist geringfügig kleiner als der Abstand zwischen dem Ansatz 13 und einer mit 18 bezeichneten Muffenaußenfläche.

In dem in Fig. 1 gezeigten, unbelasteten Zustand des Dichtungsringes 3 steht eine Dichtungslippe 14 in Fig. 1 nach unten, d.h. im wesentlichen parallel zur mit 19 bezeichneten Achse nach unten. Die Dichtungslippe 14 liegt also im wesentlichen parallel zu der mit 19 bezeichneten Achse, während die zweite Dichtungslippe 15 etwa unter einem Winkel von 90° zur Dichtungslippe 14 in Richtung auf die Achse 19, d.h. in Richtung auf die Mitte des Dichtungsringes 3 weist. Auf diese Weise wird zwischen den beiden Dichtungslippen 14, 15 eine Tasche 20 gebildet, auf die im folgenden noch näher eingegangen wird.

Die Dichtungslippe 14 hat bei der dargestellten Ausführungsform eine Länge, so daß sie mit der nach unten weisenden Fläche des Dichtungsringes 3 abschließt bzw. fluchtet. Die Länge der Dichtungslippe 15 ist derart gewählt, daß das Ende der Lippe 15 gegenüber der Achse 19 auf einem Radius liegt, der kleiner ist als der Radius der Außenwand des Spitzendes 5.

Zur Verstärkung der Ringdichtung 3 ist ein Verstärkungsring 22 aus Metall, Kunststoff oder dergleichen vorgesehen, der eine Ringwandung 23 trägt, die konzentrisch zur Achse 19 verläuft. Der Verstärkungsring 22 hat im wesentlichen L-förmiges Profil und sitzt in einer Aufnahmenut 24, die zwischen der ersten Dichtungslippe 14 und der Ringdichtung 3 vorhanden ist. Mit Hilfe des Verstärkungsrings 22 wird ein Umklappen des mit 3a bezeichneten Wandteils der Ringdichtung 3 in Richtung auf die Achse 19 verhindert und eine Stabilisierung der Ringdichtung 3 gewährleistet. Der Verstärkungsring 22 verhindert bei waagrechtem Einbau der in Fig. 1 gezeigten Rohre, zum Beispiel als Abwasserleitung, daß das Spitzende 6 durch das Eigengewicht und durch die Last desjenigen Materials, das zum Auffüllen des Verlegegrabens verwendet wird, in welchem sich die Rohre befinden, eine Verschiebung der Rohre aus der gemeinsamen Achse. Auf diese Weise wird vermieden, daß das Spitzende durch die sich aus dem Eigengewicht und das Füllmaterial erzeugten Kraftkomponenten den aus Gummi bestehenden Dichtungsring im unteren Bereich so fest zusammendrückt, daß die Dichtungslippe 15 im oberen Bereich der Muffe nicht mehr am Spitzende anliegt und es wird weiter vermieden, daß ein nicht ausreichender Anpreßdruck auftritt. Insgesamt wird damit eine Undichtheit in dem oben liegenden Ringraum der Rohrverbindung der waagrechten Rohre ausgeschlossen.

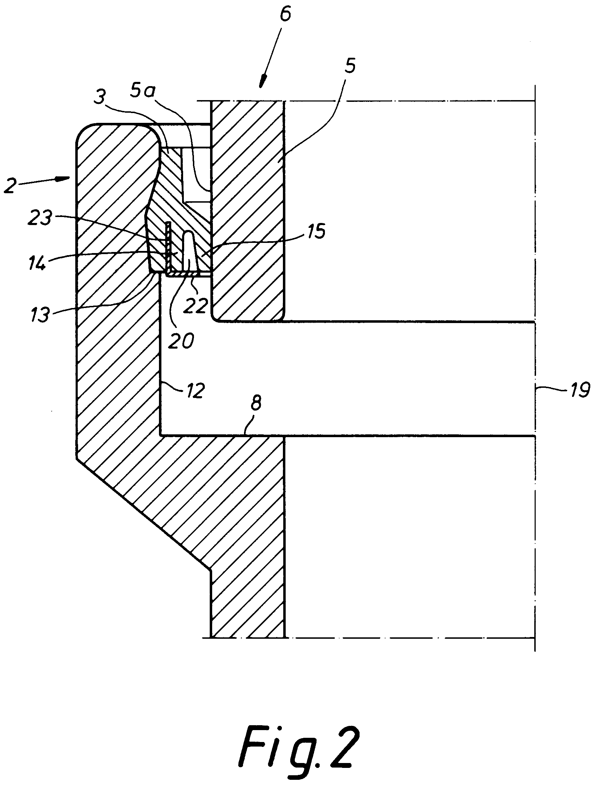

Fig. 2 zeigt eine Fig. 1 entsprechende Ansicht, wobei jedoch das Spitzende 5 in das Muffenende 2 und die Ringdichtung 3 eingeschoben ist. Die Darstellung nach Fig. 2 veranschaulicht, daß die zweite Dichtungslippe 15 nahezu parallel zur ersten Dichtungslippe 14 gebogen ist und an der Außenwand 5a des Spitzendes 5 dichtend anliegt. Die Länge der zweiten Dichtungslippe 15 ist gemäß Fig. 2 so gewählt, daß sie mehr oder weniger dicht auf dem Verstärkungsring 22 auf- bzw. anliegt, kann aber auch von kürzerer Form sein. Wesentlich ist, daß die zweite Dichtungslippe 15 so von der Ringdichtung 3 in Richtung auf das Spitzende 5 in der in Fig. 2 gezeigten Weise gebogen ist, daß sie dichtend an der Außenfläche des Spitzendes anliegt und die mit 20 bezeichnete Tasche definiert wird. Die Tasche 20 ist ersichtlicherweise zum Muffenende weg geöffnet. Wenn nunmehr in dem Muffenende 2 ein hoher Flüssigkeitsdruck erzeugt wird, wirkt dieser auf die Tasche 20 und einer gegebenenfalls weiteren, durch die Aufnahmenut 24 definierten Tasche und bewirkt eine Erweiterung der Tasche 20 oder der Taschen 20, 24, infolgedessen die zweite Dichtungslippe 15 bei zunehmendem Druck mit zunehmender Kraft gegen die Außenwand 5a des Spitzendes des Rohres 6 gedrückt wird. Zugleich wird die Dichtungslippe 14 in Richtung auf die Ringwandung 23 und damit auch in Richtung auf den Abschnitt 3a der Ringdichtung 3 gedrückt, was eine höhere Abdichtung gegenüber dem Muffenende 2 bzw. der Fläche des Einschnitts 10 zur Folge hat.

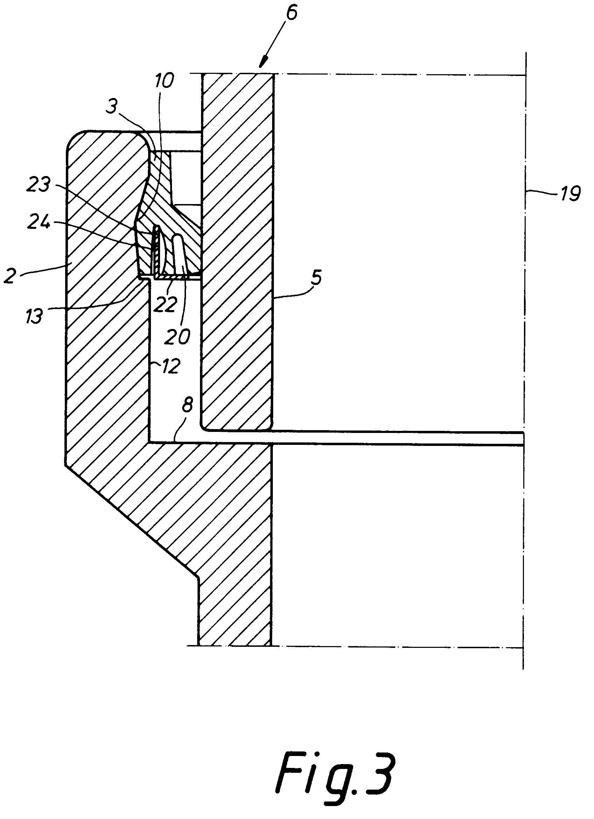

Fig. 3 gibt eine Darstellung wieder, in welcher das Spitzende 5 vollständig in das Muffenende 2 eingesetzt ist. Die vorstehenden Erläuterungen zur Erhöhung der Dichtigkeit zwischen der Ringdichtung 3 einerseits und dem Muffenende 2 bzw. Spitzende 5 andererseits gelten auch für diese Darstellung. Aus Fig. 3 geht hervor, daß die Aufnahmenut 24 in gleicher Weise als Tasche wirken kann, wie dies unter Bezugnahme auf die Tasche 20 vorstehend erläutert ist. Wird also der Druck, der über den Spalt zwischen Spitzende 5 und Muffenende 2 auf die Ringdichtung 3 wirkt, groß, kann sich die Aufnahmenut 24 in der in Fig. 3 gezeigten Weise vergrößern und ruft damit eine hohe Dichtigkeit des Wandabschnitts 3a gegenüber der Innenfläche des Einschnitts 10 hervor.

Neben der erhöhten Abdichtung, die sich aufgrund der konischen Form des Einschnittes 10 ergibt, wird damit auch die Abdichtung zwischen den beiden Enden der Rohre 1, 6 bei zunehmenden Druckwerten durch die sich aus den beiden Dichtungslippen 14, 15 definierten Taschen verbessert.

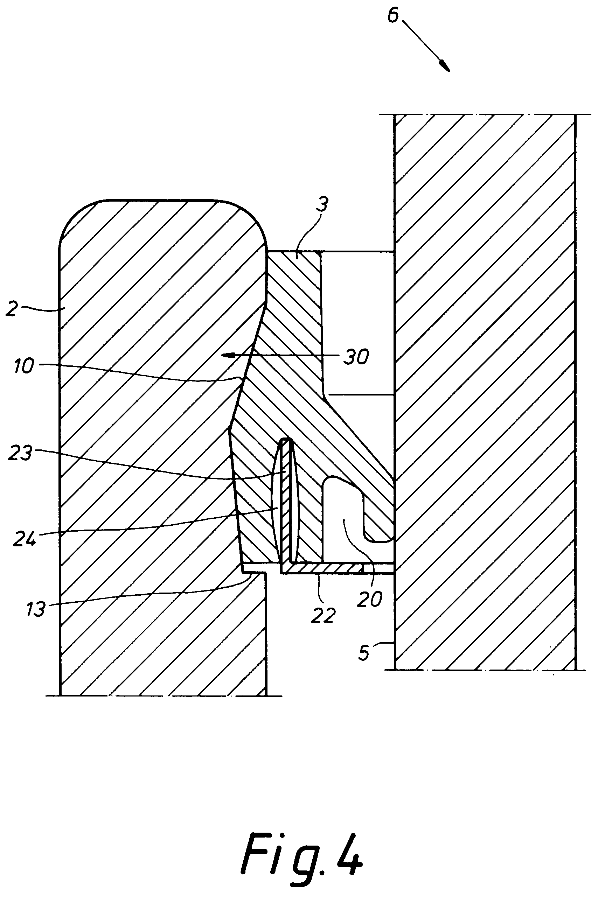

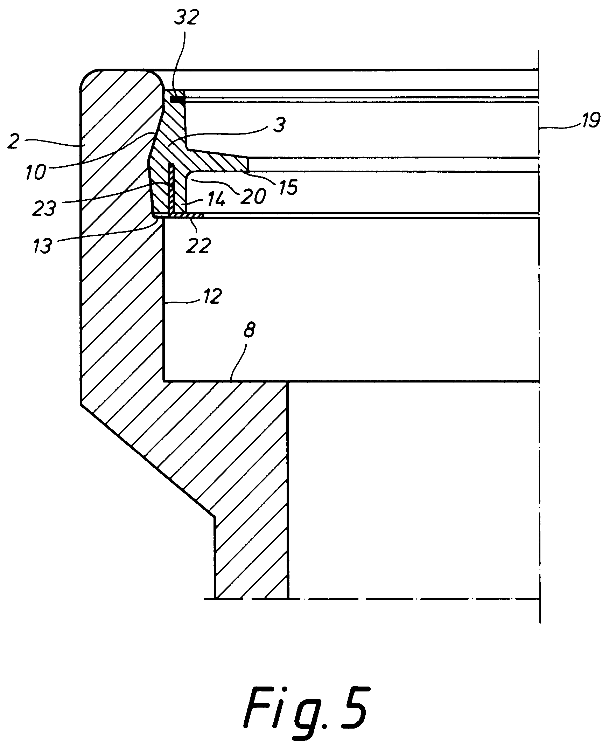

Fig. 4 zeigt eine vergrößerte Teildarstellung entsprechend Fig. 5 zur Verdeutlichung der Abdichtungserhöhung bei Erweiterung des freien Raums der Aufnahmenut 24.

Die Rohre 1, 6 werden im allgemeinen in horizontaler Lage eingebaut, infolgedessen das Spitzende 5 des Rohres 2 den in Fig.4 gezeigten Dichtring 3 als Folge der nach dem Einbau der Rohre durch das Auffüllmaterial oder dergleichen erzeugten Belastung in Richtung eines Pfeiles 30 drückt, wobei der Pfeil 30 die Schwerkraftrichtung symbolisiert. Damit wird ein Zusammenpressen des die Ringdichtung 3 bildenden Materials erfolgen. Um das Spitzende 5 an einer zu starken Verlagerung in Richtung des Pfeiles 30 zu hindern, was zur Folge hätte, daß auf der zum Pfeil 30 gegenüberliegenden oberen Seite trotz Vorhandenseins des Dichtungsrings 3 ein Luftspalt zwischen dem Spitzende und dem Muffenende der horizontal liegenden Rohre aufträte, ist der Ring 22 vorgesehen, der die Bewegung des Spitzendes 5 in Richtung des Pfeiles 30 begrenzt und das Spitzende 5 nach unten gegenüber dem Muffenende 2 abstützt. Die Bewegung des Spitzendes 5 hängt damit wesentlich von dem Innendurchmesser des Verstärkungsringes 22 ab.

Fig. 5 zeigt eine weitere Ausführungsform der Erfindung. Gemäß Fig. 5 ist an der Oberseite, d.h. an der nach außen weisenden Seite der Ringdichtung 3 ein zusätzlicher Ring 32 aus Metall oder dergleichen vorgesehen, der konzentrisch zur Achse 19 liegt und von der Innenfläche des Dichtungsringes 3 in diesen eingeschoben ist. Der Stützring 32 bewirkt eine dichtende Anlage der Ringdichtung 3 am äußeren Ende der Innenfläche des Muffenendes 2, wie dies aus Fig. 5 hervorgeht. Im übrigen entspricht der Aufbau der vorstehenden Erläuterung.

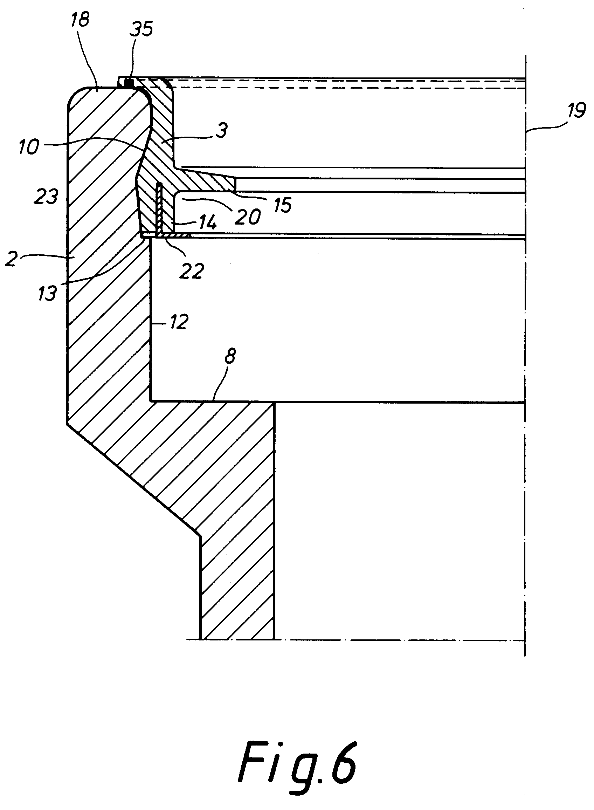

Fig. 6 zeigt eine weiter abgewandelte Ausführungsform einer Ringdichtung 3. Die Höhe der Ringdichtung 3 ist gegenüber den Ausführungsformen nach Fig. 1 und 5 größer gewählt, so daß sich die Ringdichtung 3 aus dem Muffenende 2 heraus erstreckt und die Ringfläche bzw. Stirnfläche 18 des Muffenendes 2 teilweise überdeckt. Wie sich aus Fig. 6 ergibt, ist an dem außerhalb des Muffenendes 2 befindlichen Teil der Ringdichtung 3 ein Ring 35, vorzugsweise aus Metall, vorgesehen, der in die Ringdichtung 3 eingesetzt ist und einen größeren Durchmesser hat als der Innendurchmesser des Muffenendes 2. Der Ring 35 dient ebenfalls der Erhöhung der Abdichtung zwischen Muffenende 2 und Ringdichtung 3 bzw. vermeidet ein Umklappen des oberen Endes der Ringdichtung 3 in Bezug auf die Achse 19.

Die Ringe 32 und/oder 35 dienen bei den dargestellten Ausführungsformen als Einbauhilfe beim Einsetzen des Spitzendes eines Rohres in das Muffenende eines folgenden Rohres.

Die Verstärkungsringe 22, 32, 35 können wahlweise aus Metall, Kunststoff oder einem anderen stabilen Material bestehen.

Die Erfindung schafft ein Rohr mit einem Dichtungsring, der vorzugsweise mit einem Verstärkungsring versehen ist, wobei der Dichtungsring mindestens zwei von ihm nach innen abstrebende Lippen 14, 15 aufweist, die eine bei Druckerhöhung sich erweiternde Tasche 20 definieren. Die relativ freie Beweglichkeit der Dichtungslippen 14, 15 hat bei einer Erweiterung der durch sie definierten Tasche 20 eine erhöhte Abdichtwirkung zwischen den miteinander verbundenen Rohrenden zur Folge. Die beschriebene Rohrsteckverbindung hat daher auch bei höheren Flüssigkeitswerten eine hohe Abdichtungswirkung.

Gemäß einer weiteren Ausgestaltung der Erfindung wird eine Muffenverbindung zwischen zwei Rohren geschaffen, bei welchen zwei Drucktaschen vorgesehen sind, die im Falle einer Innendruckerzeugung durch Flüssigkeiten oder dergleichen die Dichtheit erhöhen. Eine der Drucktaschen wird durch eine Aufnahmenut festgelegt, die normalerweise, das heißt bei nicht bestehendem Innendruck, als Aufnahmenut 24 für einen Verstärkungsring 22 vorgesehen ist.

Wie sich aus vorstehender Beschreibung und den zugehörigen Zeichnungen ergibt, ist der Außendurchmesser des Verstärkungsringes 22 kleiner als der minimale Innendurchmesser des Muffenendes 2 und größer als der maximale Außendurchmesser des Spitzendes 5 zu wählen. Der Durchmesser des Verstärkungsringes 32 entsprechend Fig. 5 ist kleiner als der Innendurchmesser des Muffenendes 2 in Höhe des Ringes 32, während der Durchmesser des Verstärkungsringes 35 größer als der Innendurchmesser des Muffenendes 2 gewählt ist.

## Patentansprüche

1. Rohr, insbesondere aus Ton, Steinzeug oder dergleichen mit einem Muffenende, in das ein Dichtungsring aus elastischem Material eingesetzt ist, der einen Verstärkungsring aufweist,
**dadurch gekennzeichnet**,
daß in dem Muffenende (2) ein den Muffenende-Innendurchmesser teilweise erweiternder Einschnitt (10) vorgesehen ist,
daß der Dichtungsring (3) zwei Dichtungslippen (14, 15) aufweist, von welchen sich eine erste Dichtungslippe (14) vom Muffenende (2) weg und etwa parallel zur Rohrachse (19) erstreckt,
während die zweite Dichtungslippe (15) gegenüber der ersten Dichtungslippe (14) in Richtung auf die Rohrachse (19) versetzt angeordnet ist,
wobei zwischen der ersten und zweiten Dichtungslippe (14, 15) eine Tasche (20) gebildet ist.

2. Rohr nach Anspruch 1,
**dadurch gekennzeichnet**,
daß zwischen dem Dichtungsring (3) und der ersten Dichtungslippe (14) eine Aufnahmenut (24) definiert ist, in welche die Verstärkung (22) eingesetzt ist.

3. Rohr nach Anspruch 2,
**dadurch gekennzeichnet**,
daß die Verstärkung (22) durch einen Ring gebildet ist, dessen Ringwände (23) in der Aufnahmenut (24) sitzen.

4. Rohr nach Anspruch 2,
**dadurch gekennzeichnet**,
daß die Aufnahmenut (24) eine weitere Tasche bildet.

5. Rohr nach wenigstens einem der vorangehenden Ansprüche,
**dadurch gekennzeichnet**,
daß die zweite Dichtungslippe (15) im unbelasteten Zustand etwa senkrecht zur Rohrachse (19) und in Richtung auf die Rohrachse (19) vom Dichtungsring (3) absteht.

6. Rohr nach wenigstens einem der vorangehenden Ansprüche,
**dadurch gekennzeichnet**,
daß der Einschnitt (10) eine konusförmige, sich verjüngende Innenfläche am Muffenende (2) festlegt.

7. Rohr nach wenigstens einem der vorangehenden Ansprüche,
**dadurch gekennzeichnet**,
daß ein zusätzlicher Verstärkungsring (32, 35) im Bereich der Stirnfläche (18) des Muffenendes (2) in den Dichtungsring (3) eingesetzt ist.

8. Rohr nach wenigstens einem der vorangehenden Ansprüche,
**dadurch gekennzeichnet**,
daß die beiden Dichtungslippen (14, 15), etwa von der Mitte des Dichtungsrings (3) ausgehend, im Abdichtzustand weitgehend parallel zueinander verlaufen.

9. Rohr nach wenigstens einem der vorangehenden Ansprüche,
**dadurch gekennzeichnet**,
daß der Dichtungsring (3) durch einen Absatz (13) begrenzt ist, der oberhalb des Muffenkragens (8) in Richtung auf die Stirnfläche (18) des Muffenendes (2) ausgebildet ist.

10. Rohrsteckverbindung mit einem ersten Rohr (1) nach einem der vorangehenden Ansprüche und
mit einem zweiten Rohr (6), das ein Spitzende (5) für das dichtende Einstecken in das Muffenende (2) des ersten Rohres (1) aufweist.
